# EUROPÄISCHE PATENTSCHRIFT

(11) **EP 2 725 058 B1**
(45) Veröffentlichungstag und Bekanntmachung des Hinweises auf die Patenterteilung: **09.03.2016**
(21) Anmeldenummer: 13181116.8
(22) Anmeldetag: 21.08.2013
(51) Int. Cl.: C08K 3/36, B60C 1/00, C08L 7/00, C08L 9/00, C08L 9/06

(54) **Kautschukmischung und Fahrzeugluftreifen**
Rubber composition and pneumatic tyre for a vehicle
Mélange de caoutchouc et pneu de véhicule

(30) Priorität: 24.10.2012 DE 102012110121
(43) Veröffentlichungstag der Anmeldung: 30.04.2014
(73) Patentinhaber: Continental Reifen Deutschland GmbH, 30165 Hannover (DE)
(72) Erfinder: Schwekendiek, Kirsten, 30171 Hannover (DE); Jungk, Juliane, 30163 Hannover (DE); Müller, Norbert, 29336 Nienhagen (DE); Recker, Carla, 30167 Hannover (DE)
(74) Vertreter: Finger, Karsten

(56) Entgegenhaltungen:
- EP-A1- 0 761 734
- EP-A1- 0 890 603
- EP-A1- 1 520 732
- JP-A- 2011 026 445
- US-B1- 6 342 552

## Beschreibung

Die Erfindung betrifft eine Kautschukmischung, insbesondere für Laufstreifen von Fahrzeugluftreifen, und einen Fahrzeugluftreifen.

Die Verbesserung der Fahreigenschaften von Reifen, insbesondere Fahrzeugluftreifen, ist seit jeher Ziel bei der Entwicklung neuer Kautschukzusammensetzungen. Die Fahreigenschaften der Reifen hängen dabei unter anderem stark von der Kautschukzusammensetzung des Laufstreifens ab, so dass hohe Anforderungen an die Zusammensetzung der Laufstreifen gestellt werden. Es ist bekannt, dass durch den Einsatz von auf Siliziumoxid basierenden Füllstoffen wie Kieselsäure (anstelle von Ruß) die Fahreigenschaften insgesamt auf ein höheres Niveau gebracht werden können. Dennoch existieren nach wie vor die bekannten Zielkonflikte zwischen den einzelnen Anforderungen, die an einen Reifen gestellt werden, wie z.B. zwischen den Eigenschaften Rollwiderstand und Nassbremsen. Eine Verbesserung des Nassgriffes führt in der Regel zur Verschlechterung des Rollwiderstandes, und je nach Mischungsauslegung der Wintereigenschaften und des Abriebverhaltens.
Es ist zudem bekannt, dass Kieselsäurepartikel aufgrund von Wechselwirkungen an der polaren Oberfläche der Partikel (Silanol-Gruppen) zur Aggregation neigen. Dies erfordert zum einen längere Mischzeiten und höhere Mischenergien um eine ausreichende Dispersion der Kieselsäure zu erzielen. Zum anderen führt eine schlechtere Dispersion der Kieselsäure zu einer erhöhten Viskosität (Mooney-Viskosität) der Kautschukmischung, was wiederum Nachteile bei der Prozessierbarkeit, insbesondere ein schlechteres Extrusionsverhalten mit sich bringt.

Für rußhaltige Kautschukmischungen (mit Ruß als einzigem oder Haupt-Füllstoff) ist beispielsweise aus der DE 102010017805 A1 zur Verringerung der Aggregation bekannt, amphiphile Verbindungen, insbesondere PEG-Carbonsäureester, einzusetzen.

Für kieselsäurehaltige Kautschukmischungen (mit Kieselsäure als einzigem oder Haupt-Füllstoff) dienen Organosilane wie TESPD (Bis(triethoxysilylpropyl)disulfid) neben der Anbindung des Füllstoffs an das Polymer dazu, den Füllstoff zu hydrophobieren um die oben genannten Probleme zu lösen. Als Verarbeitungswirkstoffe für Kieselsäure sind des Weiteren hydrophobierende Agenzien bekannt, wie z.B. Ammoniumsalze aus z.B. der EP 1081187 A2, Acrylate und Methacrylate aus z.B. der US 2010298488 A1 und Polyethylenglycol (PEG) aus z.B. der EP 1571009 A1. Diese Wirkstoffe haben zum Teil den Nachteil, dass sie die Heizkinetik von Kautschukmischungen derart beeinflussen, dass eine Verringerung der Anvulkanisationszeit auftritt. Dadurch können Kautschukmischungen unerwünscht während der Produktion des Reifens, wie z.B. bei der Extrusion einzelner Bauteile, vorvulkanisieren, was auch als Scorch-Anfälligkeit der Kautschukmischung bezeichnet wird.

### s. S. 2a

Der vorliegenden Erfindung liegt nun die Aufgabe zugrunde, eine Kautschukmischung, insbesondere für Laufstreifen von Fahrzeugluftreifen bereitzustellen, die eine weitere Verbesserung des Rollwiderstands ermöglicht, wobei die Kautschukmischung gleichzeitig auf einem höheren Niveau im Zielkonflikt Rollwiderstand versus Nassbremsen liegen soll. Gleichzeitig soll die Kautschukmischung eine verbesserte Prozessierbarkeit und Prozesssicherheit im Hinblick auf die Scorch-Anfälligkeit aufweisen und hinsichtlich der Ausvulkanisationszeit t₉₀ keine Nachteile zeigen, die eine unwirtschaftliche Produktion der Reifen nach sich ziehen würden.

Gelöst wird die Aufgabe erfindungsgemäß dadurch, dass die Kautschukmischung
- wenigstens einen Dienkautschuk und
- 0,1 bis 20 phr wenigstens eines Alkylpolyglycosides und
- 5 bis 180 phr wenigstens einer Kieselsäure
enthält.

In der EP 0761734 A1 wird eine Kautschukmischung offenbart, die Kieselsäure als Hauptfüllstoff enthält und eine verringerte Viskosität aufweisen soll. Hierzu enthalten die in der Tabelle 1 der EP 0761734 A1 offenbarten Kautschukmischungen Glycerin-mono-Stearat, Sorbitan-mono-Stearat oder Sorbitan-mono-Oleat bzw. Trimethylolpropan.

In der JP 2011026445 A wird eine Kautschukmischung offenbart, die Ruß als Hauptfüllstoff enthält und die Verbesserung hinsichtlich der Eigenschaften Trockenbremsen, Schnittfestigkeit (Cut & Chip) sowie Abriebresistenz zur Aufgabe hat. Hierzu enthält die Kautschukmischung SSBR mit einem speziellen Bereich für die Glasübergangstemperatur von -50 °C bis 0 °C, Ruß sowie Alkyl-D-Glucopyranosid.

Die EP 0890603 A1 beschreibt eine Kautschukmischung enthaltend Kieselsäure, die hinsichtlich ihrer Prozessierbarkeit (verringerte Viskosität) optimiert werden soll. Hierzu enthält die Kautschukmischung eine verringerte Menge an Silan und einer erhöhten Menge an Weichmacher und/oder Modifizierungsagenzien ("Modifier"), wobei als Modifizierungsagenzien u.a. Sorbitan Oleat oder Sorbitol offenbart werden (s. S. 9 bis 12 der EP 0890603 A1).

In der US 6342552 B1 wird ebenfalls eine Kautschukmischung offenbart, die Kieselsäure, eine reduzierte Silanmenge und eine erhöhte Menge an Modifizierungsagenzien ("Modifier") enthält, wobei als Modifizierungsagenzien u.a. Sorbitan Oleat oder Sorbitol offenbart werden.

In der EP 1520732 A1 wird eine Kautschukmischung offenbart, die ein Mikrogel enthält, welches aus vernetzten Dienkautschukpartikeln besteht, die ausschließlich an ihrer Oberfläche OH-Gruppen-modifiziert sind. Gute Modifizierungsergebnisse werden mit zuckerstämmigen, oberflächenaktiven Substanzen erreicht.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise ist es durch die Kombination der Bestandteile in der erfindungsgemäßen Kautschukmischung gelungen, dass die Kautschukmischung den gewünschten Effekt der Verbesserung des Zielkonfliktes Rollwiderstand vs. Nassgriff zeigt, wobei die sonstigen physikalischen Eigenschaften auf einem guten Niveau liegen. Des Weiteren zeigt sich überraschenderweise, dass die erfindungsgemäße Kautschukmischung eine verringerte Heizzeit t₉₀ aufweist, was eine ökonomisch sinnvolle Verarbeitung der erfindungsgemäßen Kautschukmischung ermöglicht und mit einer Kostenersparnis einhergeht und/oder das Überheizen anderer Reifenbauteile vermeidet. Gleichzeitig wird die t₁₀-Zeit erhöht, wodurch die Kautschukmischung weniger anfällig für ein vorzeitiges Anvulkanisieren (Scorch) z.B. bei der Extrusion während der Produktion des Reifens ist. Ein weiterer Vorteil liegt in der zumindest teilweise nachhaltigen Produzierbarkeit der Kautschukmischung, da Alkylpolyglycoside aus nachwachsenden Rohstoffen erzeugt werden.

Die erfindungsgemäße Kautschukmischung enthält zumindest einen Dienkautschuk. Die Dienkautschuke können im Verschnitt eingesetzt werden. Zu den Dienkautschuken zählen alle Kautschuke mit einer ungesättigten Kohlenstoffkette, die sich zumindest teilweise von konjugierten Dienen ableiten.
Einsetzbare Dienkautschuke sind beispielsweise natürliches Polyisopren (NR), synthetisches Polyisopren (IR), Polybutadien (BR), Styrol-Butadien-Kautschuk (SBR), Styrol-Isopren-Butadien-Terpolymer, Butylkautschuk, Halobutylkautschuk, Ethylen-Propylen-Dien-Kautschuk (EPDM) oder modifizierte Dienkautschuke. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen handeln. Es kommen aber auch weitere, der fachkundigen Person bekannte, Modifizierungen, auch als Funktionalisierungen bezeichnet, in Frage. Bestandteil solcher Funktionalisierungen können auch Metallatome sein.

Bevorzugt ist der Dienkautschuk ausgewählt aus der Gruppe bestehend aus natürlichem und/oder synthetischem Polyisopren und/oder Polybutadien und/oder Styrol-Butadien-Kautschuk.

Bevorzugt werden in der erfindungsgemäßen Kautschukmischung 10 bis 100 phr, besonders bevorzugt 30 bis 100 phr und ganz besonders bevorzugt 30 bis 90 phr natürliches und/oder synthetisches Polyisopren eingesetzt.

Bei dem Styrol-Butadien-Copolymer kann es sich um lösungspolymerisiertes Styrol-Butadien-Copolymer (S-SBR) mit einem Styrolgehalt, bezogen auf das Polymer, von 5 bis 45 Gew.-% und einem Vinylgehalt (Gehalt an 1,2-gebundenem Butadien, bezogen auf das gesamte Polymer) von 5 bis 70 Gew.-% handeln, welches zum Beispiel unter Verwendung von Lithiumalkylen in organischem Lösungsmittel hergestellt werden kann. Die S-SBR können auch gekoppelt und/oder endgruppenmodifiziert und/oder entlang der Kohlenstoffkette modifiziert (engl. backbone modified) sein. Bei der Modifizierung kann es sich um die oben beschriebenen Gruppen und Funktionalisierungen handeln.
Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Bevorzugt werden in der erfindungsgemäßen Kautschukmischung 0 bis 100 phr, besonders bevorzugt 10 bis 100 phr und ganz besonders bevorzugt 50 bis 100 phr Styrol-Butadien-Kautschuk eingesetzt.

Bei dem Polybutadien (=Butadienkautschuk, BR) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadienkautschuk) mit einem cis-Anteil von 20 bis 50 Gew.-%. Ein high-cis-Polybutadien ist z.B. Nd-BR (Neodym-katalysierter Butadienkautschuk). Mit Nd-BR werden besonders gute Eigenschaften der Kautschukmischung hinsichtlich der Zielkonflikte, insbesondere Rollwiderstand/Nassgriff erzielt.
Das eingesetzte Polybutadien kann endgruppenmodifiziert sein. Bei der Modifizierung kann es sich um die oben beschriebenen Gruppen und Funktionalisierungen handeln.

Bevorzugt werden in der erfindungsgemäßen Kautschukmischung 0 bis 50 phr, besonders bevorzugt 5 bis 45 phr Polybutadien eingesetzt.

Gemäß einer vorteilhaften Weiterbildung werden natürliches und/oder synthetisches Polyisopren und/oder Polybutadien und/oder Styrol-Butadien-Kautschuk im Verschnitt eingesetzt.
In einer besonders bevorzugten Ausführungsform enthält die Kautschukmischung 10 bis 90 phr, ganz besonders bevorzugt 10 bis 20 phr eines natürlichen und/oder synthetischen Polyisoprens, 0 bis 50 phr eines Polybutadien-Kautschuks sowie 10 bis 100 phr, ganz besonders bevorzugt 50 bis 100 phr eines Styrol-Butadien-Kautschuks. Eine solche Kautschukmischung zeigt besonders vorteilhafte Rollwiderstandseigenschaften sowie eine vorteilhafte Kombination von erhöhter t₁₀-Zeit und verringerter t₉₀-Zeit in PKW-Laufstreifen.

In einer weiteren bevorzugten Ausführungsform enthält die Kautschukmischung 30 bis 100 phr eines natürlichen und/oder synthetischen Polyisoprens, 0 bis 50 phr eines Polybutadien-Kautschuks sowie 0 bis 70 phr eines Styrol-Butadien-Kautschuks. Eine solche Kautschukmischung zeigt besonders vorteilhafte physikalische Eigenschaften in LKW-Laufstreifen.

Erfindungsgemäß enthält die Kautschukmischung wenigstens ein Alkylpolyglycosid. Alkylpolyglycoside gehören zu den Zuckertensiden. Unter Zuckertensiden werden, wie in Römpp Online, Version 3.27 beschrieben, grenzflächenaktive Substanzen, die auf der Basis von Zuckern (Kohlenhydrate) hergestellt werden, verstanden. Ein Zuckertensid besteht aus wenigstens einem Zuckerbaustein und/oder einem Derivat eines Zuckers, der bzw. das hydrophil ist, und wenigstens einem hydrophoben Teil. Der hydrophobe Teil des Zuckertensides ist bevorzugt eine gesättigte Alkylkette. Optional kann diese Alkylkette Heteroatome, wie z.B. Sauerstoff (O) oder Stickstoffatome (N), enthalten und/oder ungesättigt sein, womit sie formal ein Alkylen ist, und/oder vollständig oder zumindest teilweise statt eines oder mehrerer Wasserstoffatome Substituenten, wie Hydroxy- und/oder Amino-Funktionalitäten tragen.
Zur Vereinfachung wird im Folgenden der Begriff Zuckerbaustein verwendet, der im Rahmen der vorliegenden Erfindung auch hydrophile Bausteine beinhaltet, die Derivate eines Zuckers sind.

Unter Derivaten werden im Rahmen der vorliegenden Anmeldung, wie in Römpp Online, Version 3.27 beschrieben, "Abkömmlinge einer chemischen Verbindung" verstanden, "die man aus dieser z. B. durch strukturelle Veränderung einer funktionellen Gruppe in meist nur einem einzigen Reaktionsschritt darstellen kann (Derivatisierung)."

Bevorzugt ist es, wenn das wenigstens eine Alkylpolyglycosid als Zuckerbaustein wenigstens ein Monosaccharid ausgewählt aus der Gruppe bestehend aus Pentose und/oder Pentulose und/oder Hexose und/oder Hexulose und/oder Derivate einer Pentose und/oder Pentulose und/oder Hexose und/oder Hexulose enthält.

Besonders bevorzugt ist es, wenn das wenigstens eine Alkylpolyglycosid als Zuckerbaustein wenigstens eine Hexose enthält. Besonders bevorzugt ist es, wenn es sich bei der Hexose um Glucose handelt. In diesem Fall ist das Alkylpolyglycosid ein Alkylpolyglucosid.

Der Aufbau von Alkylpolyglycosiden mit anderen Monosaccharid-Bausteinen als Glucose ist analog zum Aufbau der Alkylpolyglucoside.
Es kann sich aber auch um ein Alkylpolyglycosid handeln, bei dem zwei oder mehrere verschiedene Monosaccharide miteinander verknüpft sind.
Der Polymerisationsgrad von Alkylpolyglycosiden gemäß GPC (Gel-Permeations-Chromatographie) bezieht sich auf den Zuckerbaustein (den Monosaccharid-Baustein. Er beträgt 1 bis 10, besonders bevorzugt 1 bis 5, ganz besonders bevorzugt 1 bis 2. Nimmt der Polymerisationsgrad den Wert 1 an, so handelt es sich um Alkylglycoside. Der Polymerisationsgrad gilt auch für Alkylpolyglycoside, bei denen zwei oder mehrere verschiedene Monosaccharide und/oder Derivate von Monosacchariden (Zuckern) miteinander verknüpft sind.
Die Bestimmung des Polymerisationsgrades kann darüber hinaus mit allen dem Fachmann bekannten dazu geeigneten Methoden erfolgen.

Der hydrophobe Teil von Alkylpolyglycosiden ist eine Alkylkette, also eine gesättigte Kohlenwasserstoffkette. Die

Alkylpolyglycoside sind als Gemische von Molekülen mit unterschiedlich langen Alkylketten erhältlich. Die Alkylkette des erfindungsgemäß eingesetzten Alkylpolyglycosids ist durchschnittlich aus 4 bis 20 Kohlenstoffatomen aufgebaut. Besonders bevorzugt ist es, wenn die Kohlenstoffkette des Fettalkohols des Alkylpolyglycosids zu 97 bis 100 Gew.-% aus 8 und/oder 10 und/oder 12 und/oder 14 Kohlenstoffatomen aufgebaut ist. Bevorzugt enthält das Alkylpolyglycosid 20 bis 50 Gew.-%, besonders bevorzugt 33 bis 40 Gew.-%, Kohlenstoffketten mit 8 Kohlenstoffatomen (C₈-Ketten) und 10 bis 40 Gew.-%, besonders bevorzugt 21 bis 28 Gew.-%, C₁₀-Ketten und 10 bis 45 Gew.-%, besonders bevorzugt 27 bis 32 Gew.-%, C₁₂-Ketten und 1 bis 20 Gew.-%, besonders bevorzugt 9 bis 12 Gew.-%, C₁₄-Ketten.
Ein solches Alkylpolyglycosid ist z.B. unter dem Handelsnamen Plantacare® 2000 UP der Firma Cognis GmbH, Care Chemicals erhältlich.

Erfindungsgemäß enthält die Kautschukmischung 0,1 bis 20 phr wenigstens eines Alkylpolyglycosides, bevorzugt 1,5 bis 15 phr, besonders bevorzugt 1,5 bis 11 phr wenigstens eines Alkylpolyglycosides.

Erfindungsgemäß enthält die Kautschukmischung wenigstens eine Kieselsäure. Bei der Kieselsäure kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 100 bis 260 m²/g und ganz besonders bevorzugt von 130 bis 235 m²/g und eine CTAB-Oberfläche (gemäß ASTM D 3765) von 30 bis 350 m²/g, bevorzugt von 30 bis 250 m²/g, besonders bevorzugt von 100 bis 250 m²/g und ganz besonders bevorzugt von 125 bis 230 m²/g aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Die Menge der eingesetzten Kieselsäure beträgt 5 bis 180 phr, bevorzugt 20 bis 180 phr, besonders bevorzugt 20 bis 140 phr und ganz besonders bevorzugt 40 bis 100 phr. Besonders mit einer Menge von 40 bis 100 phr werden sehr gute Vulkanisateigenschaften, insbesondere sehr gute Abriebeigenschaften, der Kautschukmischung erzielt.

Die Kautschukmischung kann außerdem noch andere polare Füllstoffe, wie beispielsweise Alumosilicate, Kreide, Stärke, Magnesiumoxid, Titandioxid oder Kautschukgele enthalten.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Die Silan-Kupplungsagenzien werden in Mengen von 0,2 bis 30 phf, bevorzugt 1 bis 15 phf, eingesetzt, da dann eine optimale Anbindung des Füllstoffes an den oder die Kautschuke erfolgen kann. Die Einheit phf (parts per hundred parts of filler by weight) bezieht sich hierbei jeweils auf 100 Gewichtsteile Füllstoff.

Die Kautschukmischung kann außerdem als Füllstoff Ruß enthalten. Die verwendbaren Ruße weisen bevorzugt folgende Charakteristika auf: DBP-Zahl (gemäß ASTM D 2414) 70 bis 200 mL/100 g, STSA-Oberfläche (gemäß ASTM D 6556) 70 bis 170 m²/g und Jodadsorptionszahl (gemäß ASTM D 1510) 10 bis 250 g/kg. Vorteilhafte Eigenschaften hinsichtlich des Rollwiderstandsverhaltens lassen sich in der erfindungsgemäßen Kautschukmischung beispielsweise mit dem Ruß N 121 (DBP = 132 mL/100 g; STSA = 114 m²/g; Jodadsorptionszahl = 121 g/kg) erzielen.

Des Weiteren kann die erfindungsgemäße Kautschukmischung übliche Zusatzstoffe in üblichen Gewichtsteilen enthalten. Zu diesen Zusatzstoffen zählen a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), b) Aktivatoren, wie z. B. Zinkoxid und Fettsäuren (z. B. Stearinsäure), c) Wachse, d) Harze und e) Mastikationshilfsmittel, wie z. B. 2,2'-Dibenzamidodiphenyldisulfid (DBD).

Die Kautschukmischung kann außerdem Weichmacher enthalten. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 25000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.
Bevorzugt handelt es sich bei dem Weichmacher um TDAE. Es ist im Rahmen dieser Erfindung auch denkbar, dass ein Gemisch der genannten Weichmacher eingesetzt wird. Die Menge an diesen Weichmachern beträgt 0 bis 70 phr, bevorzugt 0 bis 60 phr.
In einer bevorzugten Ausführungsform der Erfindung werden wenigstens 0,1 phr, bevorzugt 1 bis 50 phr, Weichmacher eingesetzt. Sehr gute Ergebnisse hinsichtlich des Zielkonfliktes Rollwiderstand/Nassgriff sowie der sonstigen Mischungseigenschaften zeigen sich, wenn die Kautschukmischung 30 bis 40 phr Weichmacher enthält.
In einer weiteren bevorzugten Ausführungsform der Erfindung ist die Kautschukmischung frei von Weichmachern, das heißt sie enthält in dieser bevorzugten Ausführungsform 0 phr Weichmacher. Eine solche Kautschukmischung, welche 0 phr Weichmacher enthält, zeigt, insbesondere bei Laufstreifen von LKW-Reifen, erfahrungsgemäß gute Eigenschaften hinsichtlich des Abriebverhaltens.

Die Vulkanisation wird in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigem und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).
Gemäß einer vorteilhaften Weiterbildung der Erfindung werden mehrere Beschleuniger im eingesetzt. Bevorzugt wird ein Sulfenamidbeschleuniger, besonders bevorzugt CBS, in Kombination mit dem Guanidin-Beschleuniger DPG (Diphenylguanidin) eingesetzt.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049261 A2 beschrieben sind, können in der Kautschukmischung eingesetzt werden.

Außerdem können in der Kautschukmischung Vulkanisationsverzögerer sowie weitere die Vulkanisation beeinflussende Substanzen vorhanden sein.

Der Erfindung liegt weiterhin die Aufgabe zugrunde einen Fahrzeugluftreifen bereitzustellen, der in wenigstens einem Bauteil die erfindungsgemäße Kautschukmischung enthält. Bevorzugt handelt es sich bei dem Bauteil um einen Laufstreifen. Die Kautschukmischung kann aber auch in der Seitenwand und/oder in den inneren Bauteilen eines Fahrzeugluftreifens, den sogenannten Body-Bauteilen, zum Einsatz kommen.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel, Beschleuniger, Schwefelspender und ggf. weitere vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden.

Die Kautschukmischung ist weiterhin zur Herstellung von technischen Kautschukartikeln wie z.B. Transportbändern, Riemen, Gurten, Schläuchen, Drucktüchern, Luftfedern oder Dämpfungselementen geeignet.

Die Erfindung soll nun anhand von Vergleichs- und Ausführungsbeispielen, die in den Tabellen 1 und 2 zusammengefasst sind, näher erläutert werden.

Die Vergleichsmischungen sind mit V, die erfindungsgemäßen Mischungen sind mit E gekennzeichnet.

Die Mischungsherstellung erfolgte unter üblichen Bedingungen in drei Stufen in einem Labortangentialmischer. Es wurden die Umsatzzeiten bis zum Erreichen der relativen Vernetzungsgrade von 10 und 90 % (t₁₀, t₉₀) über ein rotorloses Vulkameter (MDR = Moving Disc Rheometer) gemäß DIN 53 529 ermittelt. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Umsatzzeiten von 10% Umsatz (t₁₀ Anvulkanisationszeit) und 90% Umsatz (t₉₀, Ausvulkanisationszeit) mittels rotorlosem Vulkameter (MDR = Moving Disc Rheometer) gemäß DIN 53 529
- Shore A Härte bei Raumtemperatur gemäß DIN ISO 7619-1
- Rückprallelastizitäten bei Raumtemperatur (RT) und 70 °C gemäß DIN 53 512
- Zugfestigkeit, Reißdehnung und Spannungswert bei 300% statischer Dehnung (Modul 300) bei Raumtemperatur gemäß DIN 53 504
- Mooney-Viskosität gemäß ASTM D1646
- Schlagzugfähigkeit bei Raumtemperatur gemäß DIN EN ISO 8256

**Tabelle 1**

| **Bestandteile** | **Einheit** | **V1** | **E1** | **E2** | **E3** |
|---|---|---|---|---|---|
| NR TSR | phr | 10 | 10 | 10 | 10 |
| Nd-BR ^{a)} | phr | 18 | 18 | 18 | 18 |
| S-SBR ^{b)} | phr | 72 | 72 | 72 | 72 |
| Kiese säure ^{c)} | phr | 95 | 95 | 95 | 95 |
| Weichmacher TDAE | phr | 35 | 35 | 35 | 35 |
| Silan ^{d)} | phf | 7,2 | 7,2 | 7,2 | 7,2 |
| Alkylpolyglycosid ^{e)} | phr | 0 | 2 | 5 | 10 |
| Alterungsschutzmittel | phr | 4 | 4 | 4 | 4 |
| Stearinsäure | phr | 2,5 | 2,5 | 2,5 | 2,5 |
| Zinkoxid | phr | 2,5 | 2,5 | 2,5 | 2,5 |
| Beschleuniger ^{f)} | phr | 4 | 4 | 4 | 4 |
| Schwefel | phr | 2 | 2 | 2 | 2 |

| **Eigenschaften** | | | | | |
|---|---|---|---|---|---|
| Mooney-Viskosität ML (1+4) b. 100 °C | Mooney-Einh. | 58 | 54 | 46 | 39 |
| Anvulkanisationszeit t₁₀ | min | 1,8 | 3,5 | 5,3 | 6,0 |
| Ausvulkanisationszeit t₉₀ | min | 18,4 | 16,3 | 15,2 | 15,5 |
| Shore A Härte bei RT | Shore A | 68 | 69 | 68 | 66 |
| Rückprallelast. bei RT | % | 25 | 25 | 26 | 28 |
| Rückprallelast. bei 70 °C | % | 46 | 48 | 49 | 51 |
| Differenz (Rückprallelast. 70 °C - RT) | % | 21 | 23 | 23 | 23 |
| Zugfestigkeit bei RT | MPa | 14 | 15 | 15 | 14 |
| Reißdehnung bei RT | % | 452 | 443 | 455 | 438 |
| Modul 300 % | MPa | 9,2 | 9,8 | 9,4 | 9,6 |

| | | | | | |
|---|---|---|---|---|---|
| ^{a)} BR: High cis BR, Buna® CB 25, Fa. Lanxess ^{b)} SSBR: NS 116, Fa. Nippon Zeon ^{c)} Kieselsäure: Ultrasil® VN 3, Fa. Evonik ^{d)} Silan: Si 261®, Fa. Evonik ^{e)} Alkylpolyglycoside: Plantacare® 2000 UP, Alkylpolyglucosid, Fa. Cognis GmbH, Care Chemicals ^{f)} Beschleuniger: CBS, DPG | | | | | |

Aus Tabelle 1 ist ersichtlich, dass die erfindungsgemäßen Kautschukmischungen E1 bis E3 im Vergleich zur Referenz V1 größere Werte für die Rückprallelastizitäten bei 70 °C aufweisen, was einen Indikatoren für eine Verbesserung des Rollwiderstands dieser erfindungsgemäßen Kautschukmischungen darstellt. Des Weiteren zeigen die Kautschukmischungen E1 bis E3 eine größere Differenz der Rückprallelastizitäten bei 70 °C und bei Raumtemperatur, was einen Indikator für ein verbessertes Niveau des Zielkonfliktes Rollwiderstand versus Nassgriff darstellt. Überraschenderweise sind die Anvulkanisationszeiten t₁₀ von E1 bis E3 erhöht, während die Ausvulkanisationszeiten t₉₀ verringert sind. Zusammen mit den verringerten Mooney-Viskositäten weisen die erfindungsgemäßen Kautschukmischungen eine optimale Prozessierbarkeit bei sehr guten physikalischen Eigenschaften auf.

**Tabelle 2**

| **Bestandteile** | **Einheit** | **V2** | **E4** |
|---|---|---|---|
| NR TSR | phr | 80 | 80 |
| Nd-BR ^{a)} | phr | 20 | 20 |
| Ruß N 121 | phr | 30 | 30 |
| Kieselsäure ^{b)} | phr | 30 | 30 |
| Weichmacher | phr | 0 | 0 |
| Silan ^{c)} | phf | 4 | 4 |
| Alkylpolyglycosid ^{d)} | phr | 0 | 5 |
| Alterungsschutzmittel | phr | 4,5 | 4,5 |
| Stearinsäure | phr | 2 | 2 |
| Zinkoxid | phr | 3 | 3 |
| Beschleuniger DPG ^{e)} | phr | 1,6 | 1,6 |
| Schwefel | phr | 1,65 | 1,65 |

| **Eigenschaften** | | | |
|---|---|---|---|
| Mooney-Viskosität ML (1+4) b. 100 °C | Mooney-Einh. | 93 | 88 |
| Anvulkanisationszeit t₁₀ | min | 1,6 | 1,4 |
| Ausvulkanisationszeit t₉₀ | min | 4,2 | 3,8 |
| Shore A Härte bei RT | Shore A | 65 | 66 |
| Rückprallelast. bei RT | % | 46,9 | 46,4 |
| Rückprallelast. bei 70 °C | % | 58,5 | 59,5 |
| Differenz (Rückprallelast. 70 °C - RT) | % | 11,6 | 13,1 |
| Schlagzugfähigkeit | MJ/m³ | 7,3 | 7,3 |
| Zugfestigkeit bei RT | MPa | 23,7 | 22,7 |
| Reißdehnung bei RT | % | 524 | 519 |
| Modul 300 % | MPa | 12,9 | 12,5 |

| | | | |
|---|---|---|---|
| ^{a)} BR: Europrene® NEOCIS BR 40, Fa. Polimeri ^{b)} Kieselsäure: Zeosil® 1165 MP, Fa. Rhodia ^{c)} Silan: SG® SI 996, Fa. Nanjing Shuguang Silane Co., Ltd. ^{d)} Alkylpolyglycoside: Plantacare® 2000 UP, Alkylpolyglucosid, Fa. Cognis GmbH, Care Chemicals ^{c)} Beschleuniger: CBS, DPG | | | |

Aus Tabelle 2 ist ersichtlich, dass die erfindungsgemäße Kautschukmischungen E4 im Vergleich zur Referenz V2 einen größeren Wert für die Rückprallelastizität bei 70 °C aufweist, was einen Indikatoren für eine Verbesserung des Rollwiderstands dieser erfindungsgemäßen Kautschukmischungen darstellt. Des Weiteren zeigt die Kautschukmischungen E4 eine größere Differenz der Rückprallelastizitäten bei 70 °C und bei Raumtemperatur, was einen Indikator für ein verbessertes Niveau des Zielkonfliktes Rollwiderstand versus Nassgriff darstellt. Überraschenderweise ist die Shore A Härte von E4 gegenüber V2 erhöht.

Die Ausvulkanisationszeiten t₉₀ der E4 ist gegenüber der V2 verringert. Zusammen mit der verringerten Mooney-Viskosität weist die erfindungsgemäße Kautschukmischung eine optimale Prozessierbarkeit bei sehr guten physikalischen Eigenschaften auf.

## Patentansprüche

1. Kautschukmischung enthaltend
- wenigstens einen Dienkautschuk und
- 0,1 bis 20 phr wenigstens eines Alkylpolyglycosides und
- 5 bis 180 phr wenigstens einer Kieselsäure

2. Kautschukmischung nach Anspruch 1, **dadurch gekennzeichnet, dass** der Dienkautschuk ausgewählt ist aus der Gruppe bestehend aus natürlichem Polyisopren und/oder synthetischem Polyisopren und/oder Polybutadien und/oder Styrol-Butadien-Kautschuk.

3. Kautschukmischung nach Anspruch 2, **dadurch gekennzeichnet, dass** das Alkylpolyglycosid als Zuckerbaustein wenigstens ein Monosaccharid ausgewählt aus der Gruppe bestehend aus Pentose und/oder Pentulose und/oder Hexose und/oder Hexulose und/oder Derivate einer Pentose und/oder Pentulose und/oder Hexose und/oder Hexulose enthält.

4. Kautschukmischung nach Anspruch 3, **dadurch gekennzeichnet, dass** das Alkylpolyglycosid als Zuckerbaustein wenigstens eine Hexose enthält bzw. enthalten.

5. Kautschukmischung nach Anspruch 4, **dadurch gekennzeichnet, dass** es sich bei der Hexose um Glucose handelt.

6. Kautschukmischung nach einem der Ansprüche 1 bis 5, **dadurch gekennzeichnet, dass** die Kieselsäure eine BET-Oberfläche von 100 bis 260 m²/g und eine CTAB-Oberfläche von 100 bis 250 m²/g aufweist.

7. Fahrzeugluftreifen, **dadurch gekennzeichnet, dass** er in wenigstens einem Bauteil wenigstens eine Kautschukmischung nach einem der Ansprüche 1 bis 6 enthält.

8. Fahrzeugluftreifen nach Anspruch 7, **dadurch gekennzeichnet, dass** es sich bei dem Bauteil um einen Laufstreifen handelt.

## Claims

1. Rubber mixture comprising
- at least one diene rubber and
- 0.1 to 20 phr of at least one alkyl polyglycoside and
- 5 to 180 phr of at least one silica.

2. Rubber mixture according to Claim 1, **characterized in that** the diene rubber is selected from the group consisting of natural polyisoprene and/or synthetic polyisoprene and/or polybutadiene and/or styrene-butadiene rubber.

3. Rubber mixture according to Claim 2, **characterized in that** the alkyl polyglycoside contains, as sugar unit, at least one monosaccharide selected from the group consisting of pentose and/or pentulose and/or hexose and/or hexulose and/or derivatives of a pentose and/or pentulose and/or hexose and/or hexulose.

4. Rubber mixture according to Claim 3, **characterized in that** the alkyl polyglycoside contains, as sugar unit, at least one hexose.

5. Rubber mixture according to Claim 4, **characterized in that** the hexose is glucose.

6. Rubber mixture according to any of Claims 1 to 5, **characterized in that** the silica has a BET surface area of 100 to 260 m²/g and a CTAB surface area of 100 to 250 m²/g.

7. Pneumatic vehicle tyre, **characterized in that** it contains at least one rubber mixture according to any of Claims 1 to 6 in at least one component.

8. Pneumatic vehicle tyre according to Claim 7, **characterized in that** the component is a tread.

## Revendications

1. Mélange de caoutchouc, contenant :
- au moins un caoutchouc diénique et
- 0,1 à 20 pce d'au moins un alkylpolyglycoside et
- 5 à 180 pce d'au moins une silice.

2. Mélange de caoutchouc selon la revendication 1, **caractérisé en ce que** le caoutchouc diénique est choisi dans le groupe constitué par le polyisoprène naturel et/ou le polyisoprène synthétique et/ou le polybutadiène et/ou le caoutchouc de styrène-butadiène.

3. Mélange de caoutchouc selon la revendication 2, **caractérisé en ce que** l'alkylpolyglycoside contient en tant qu'élément constitutif sucre au moins un monosaccharide choisi dans le groupe constitué par un pentose et/ou un pentulose et/ou un hexose et/ou un hexulose et/ou les dérivés d'un pentose et/ou d'un pentulose et/ou d'un hexose et/ou d'un hexulose.

4. Mélange de caoutchouc selon la revendication 3, **caractérisé en ce que** l'alkylpolyglycoside contient en tant qu'élément constitutif sucre au moins un hexose.

5. Mélange de caoutchouc selon la revendication 4, **caractérisé en ce que** l'hexose est le glucose.

6. Mélange de caoutchouc selon l'une quelconque des revendications 1 à 5, **caractérisé en ce que** la silice présente une surface BET de 100 à 260 m²/g et une surface CTAB de 100 à 250 m²/g.

7. Pneumatique de véhicule, **caractérisé en ce qu'**il contient dans au moins un composant au moins un mélange de caoutchouc selon l'une quelconque des revendications 1 à 6.

8. Pneumatique de véhicule selon la revendication 7, **caractérisé en ce que** le composant est une bande de roulement.
